Europäisches Patentamt

European Patent Office

Office européen des brevets

(19)

(11) Veröffentlichungsnummer : **0 074 035**
**B1**

(12)

# EUROPÄISCHE PATENTSCHRIFT

(45) Veröffentlichungstag der Patentschrift :
**11.11.87**

(51) Int. Cl.⁴ : **C 08 J   9/06, C 08 L 27/06**

(21) Anmeldenummer : **82107899.5**

(22) Anmeldetag : **27.08.82**

(54) **Trockene pulverförmige Massen und Verfahren zur Herstellung von Polyvinylchlorid-Flächengebilden mit Schaumstruktur.**

(30) Priorität : **28.08.81 HU 248581**

(43) Veröffentlichungstag der Anmeldung :
**16.03.83 Patentblatt 83/11**

(45) Bekanntmachung des Hinweises auf die Patenterteilung : **11.11.87 Patentblatt 87/46**

(84) Benannte Vertragsstaaten :
**AT BE CH DE FR GB IT LI LU NL SE**

(56) Entgegenhaltungen :
DE-A- 2 016 043
DE-A- 2 143 377
DE-B- 1 194 139
DE-B- 1 694 709
FR-A- 2 186 495
FR-A- 2 274 649
GB-A-   778 880
GB-A- 1 281 489
US-A- 3 293 108
ENCYCLOPEDIA OF POLYMER SCIENCE AND TECHNOLOGY, Band 14, 1971, Seite 371, "Vinyl chloride polymers, thermal properties"
Die Akte enthält technische Angaben, die nach dem Eingang der Anmeldung eingereicht wurden und die nicht in dieser Patentschrift enthalten sind.

(73) Patentinhaber : **GRABOPLAST GYÖRI PAMUTSZÖVÖ ES MÜBÖRGYAR**
**Fehérvari ut 16/B**
**Györ (HU)**

(72) Erfinder : **Farkas, Ferenc, Dr. Dipl.-Ing.**
**Zombor u. 5**
**Györ (HU)**
Erfinder : **Jandò, Tamás, Dipl.-Ing.**
**Zrinyi u. 4/a**
**Györ (HU)**
Erfinder : **Kertész, Tibor, Dr. Dipl.-Ing.**
**Zombor u. 5**
**Györ (HU)**
Erfinder : **Stelczer, Tibor, Dipl.-Ing.**
**Felszabadulás u. 96**
**Györ (HU)**
Erfinder : **Tomaskovics, Gyula**
**Fehérvári u. 5/c**
**Györ (HU)**
Erfinder : **Varju, Ernö, Dipl.-Ing.**
**Fehérvári u. 5/c**
**Györ (HU)**

(74) Vertreter : **Beszédes, Stephan G. Dr.**
**Münchener Strasse 80a Postfach 1168**
**D-8060 Dachau (DE)**

## Beschreibung

Die Erfindung betrifft neue überlegene trockene pulverförmige Massen zur Herstellung von Polyvinylchlorid-Flächengebilden mit Schaumstruktur und ein besseres Verfahren zur Herstellung der letzteren.

Zur Herstellung von Polyvinylchlorid-Flächengebilden mit Schaumstruktur ist in der Praxis das Streichverfahren am meisten verbreitet. Das Wesen dieses Verfahrens besteht darin, daß auf einen später einen Teil des Flächengebildes bildenden oder von diesem nachträglich ablösbaren Träger ein aus durch Emulsionspolymerisation hergestelltem Polyvinylchlorid, Schaumbildnern und sonstigen verfahrenstechnischen beziehungsweise technologischen Hilfs- und Zusatzstoffen, zum Beispiel Weichmachern, Wärme- und Lichtstabilisatoren, Füllstoffen und Farbstoffen bestehendes Plastisol oder Plastigel aufgetragen, dann durch Wärmebehandlung das Polyvinylchlorid geliert und der Polymerfilm ausgebildet und das Produkt in der gleichen Stufe oder in einer folgenden Stufe durch Wärmebehandlung aufgeschäumt wird. Beim Aufschäumen wird das Material auf eine Temperatur, bei der sich aus den vorher zugesetzten Schaumbildnern gasförmige Stoffe bilden, erhitzt. Mit der Streichverfahrenstechnik können gleichmäßig aufgeschäumte Polyvinylchlorid-Flächengebilde einfach und mit hoher Produktivität sowie guter Qualität hergestellt werden. Bei Verwendung von mehreren Streichköpfen können mit der Streichverfahrenstechnik in einem einzigen Arbeitsgang mit Leichtigkeit auch mehrschichtige Polyvinylchlorid-Flächengebilde hergestellt werden. Die Streichverfahrenstechnik hat jedoch den Nachteil, daß mit ihr nur durch Emulsionspolymerisation hergestelltes Polyvinylchlorid verarbeitet werden kann : aus durch Suspension- oder Blockpolymerisation erhaltenem Polyvinylchlorid kann infolge der sich während der Polymerisation herausbildenden Morphologie des Polymers das für die Streichverfahrenstechnik erforderliche flüssige viskose Plastisol oder Plastigel nicht hergestellt werden.

Durch Suspensions- oder Blockpolymerisation hergestelltes Polyvinylchlorid kann nur durch als Rohstoff trockenen Polymerstaub erfordernde Verfahrenstechniken beziehungsweise Technologien zu Flächengebilden verarbeitet werden. Solche Verfahrenstechniken beziehungsweise Technologien sind zum Beispiel das Strangpressen, Kalandrieren und das Verarbeiten unter Schmelzen in einem Walzenstuhl. Für die Herstellung von Polyvinylchlorid-Flächengebilden mit kompaktem Querschnitt haben sich diese Verfahrenstechniken beziehungsweise Technologien gut bewährt, ihre Anwendung zur Herstellung von geschäumten Polyvinylchlorid-Flächen aus durch Suspensions- oder Blockpolymerisation hergestelltem Polyvinylchlorid stößt jedoch auf Schwierigkeiten.

Die Herstellung von Flächengebilden mit Schaumstruktur durch Kalandrieren ist in den deutschen Offenlegungsschriften 2 145 026 und 2 616 083 beschrieben. Gemäß diesen wird aus dem trockenen Pulvergemisch bei einer Temperatur, welche niedriger als die Schäumtemperatur ist, auf den Kalanderwalzen eine Bahn gebildet und diese wird zur Schaumbildung entweder durch das auf Aufschäumungstemperatur aufgeheizte letzte Walzenpaar des Kalanders geführt oder auf einem sich an den Kalander anschließenden auf die Aufschäumungstemperatur aufgeheizten Walzenpaar behandelt.

Diese Verfahren haben folgende Nachteile :

A) Der Bereich der für diese Verfahren einsetzbaren Schaumbildner und Verarbeitungshilfsstoffe, zum Beispiel Weichmacher, Füllstoffe beziehungsweise Stabilisatoren, ist sehr beschränkt. Die in der Polyvinylchloridverarbeitung üblicherweise verwendeten Hilfsstoffe machen nämlich das Polyvinylchlorid bei der zum Schäumen erforderlichen verhältnismäßig hohen Temperatur derart klebrig, daß die Bahn an den Kalanderwalzen kleben bleibt. Dadurch entstehen Unterbrechungen der kontinuierlichen Fertigung, die Walzen müssen gereinigt werden, die Qualität des Produktes sinkt ab und jedes erneute Anfahren des Kalanders ist mit beträchtlichem Zeitverlust verbunden.

B) Die Schaumbildung im Material tritt bereits bei der niedrigeren Temperatur der Kalanderwalzen ein und infolgedessen verläuft der Schäumungsvorgang nicht gleichmäßig, die fertige Bahn ist wellig, von schlechter Qualität.

C) Die durch Kalandrieren, Strangpressen oder Verarbeiten unter Schmelzen in einem Schmelzwalzenstuhl hergestellten Produkte haben die gemeinsame unangenehme Eigenschaft, wesentlich weniger maßhaltig beziehungsweise maßbeständig zu sein als die mit der Streichverfahrenstechnik beziehungsweise -technologie hergestellten Produkte. Dies ist darauf zurückzuführen, daß bei diesen Verfahrenstechniken beziehungsweise Technologien wesentlich größere Zugkräfte ausgeübt werden und daher das Produkt, in welchem starke unausgeglichene Spannungen verblieben sind, einer Entspannung beziehungsweise Relaxation unterliegt. Durch umständliche und zeitraubende Schrumpfungsverfahren kann zwar diese unerwünschte Wirkung verringert werden, das Ergebnis ist jedoch nicht immer zufriedenstellend.

D) Mit dem Kalander beziehungsweise dem Schmelzwalzenstuhl können keine mehrschichtigen Produkte hergestellt werden, weil die Dehnung der einzelnen Schichten unterschiedlich ist. Dies führt bei der Bahnbildung und der Schäumung zu unlösbaren Problemen hinsichtlich des Spannungsausgleiches.

2

Mehrschichtige Produkte können nur durch nachträgliches Zusammenkleben der getrennt voneinander hergestellten Bahnen erzeugt werden. Das erhöht natürlich den Aufwand an Zeit, Arbeitskräften und Vorrichtungen.

Der Erfindung liegt die Aufgabe zugrunde, unter Behebung der Nachteile des Standes der Technik trockene pulverförmige Massen zur Herstellung von Polyvinylchlorid-Flächengebilden mit Schaumstruktur, aus welchen die letzteren mit größer Produktivität und in einfacher Weise sowohl 1-schichtig als auch mehrschichtig hergestellt werden können, wobei ihre Eigenschaften bei weitem besser als die der nach den bekannten Verfahren aus trockenen pulverförmigen Massen hergestellten Produkte und genauso gut oder besser als die der nach den Streichverfahren hergestellten Produkte sind, sowie ein besseres Verfahren zur Herstellung der Polyvinylchlorid-Flächengebilde mit Schaumstruktur zu schaffen.

Das Obige wurde überraschenderweise durch die Erfindung erreicht.

Es wurde nämlich nun überraschenderweise festgestellt, daß diese Aufgabe dadurch gelöst werden kann, daß die zu verarbeitenden trockenen pulverförmigen Massen ein Methacrylsäuremethyl/ethyl/n-butylester-Terpolymer, welches eine Verglasungstemperatur ($T_g$), die höchstens 20 °C höher als die des verwendeten Polyvinylchlorides ist, hat, in bestimmten Mengenanteilen enthalten. Durch den Zusatz dieser Polymere werden Gemische, welche bereits bei niedrigeren Temperaturen zu kompakten Flächengebilden geformt werden können, erhalten, wodurch bei der Herstellung der Polyvinyl-Flächengebilde vermieden wird, daß die partielle Schaumbildung bereits beim Formen der Bahn beginnt. Ferner wurde überraschenderweise festgestellt, daß es zweckmäßig ist, die im Querschnitt noch kompakte Bahn nicht unmittelbar auf dem Kalander oder im Walzenstuhl aufzuschäumen, sondern durch einen beheizten Schrank zu führen, da in diesem Falle das Ankleben des Polyvinylchlorides an die Verarbeitungsvorrichtung völlig vermieden werden kann. Dies hat den Vorteil, daß auch andere als die garantiert keine Haftung herbeiführenden Hilfs- und Verarbeitungsstoffe eingesetzt werden können. Schließlich wurde überraschenderweise festgestellt, daß in der die Bahn erzeugenden Vorrichtung, zum Beispiel im Walzenstuhl, in einem einzigen Arbeitsgang mehrschichtige Produkte hergestellt werden können, wenn die mit der Vorrichtung unmittelbar in Berührung kommende Schicht auf einem später einen Teil des Endproduktes bildenden oder von diesem nachträglich ablösbaren Träger ausgebildet wird.

Gegenstand der Erfindung sind daher trockene pulverförmige Gemische zur Herstellung von geschäumten PVC-Flächengebilden in zwei Verfahrensstufen, welches

a) Emulsions-, Suspensions- und/oder Blockpolymerisations-PVC,
b) einen oder mehrere Schaumbildner in einer Menge von 1 bis 10 Gew.-%, bezogen auf das PVC,
c) auf das PVC bezogen höchstens 150 % Zusatz- und/oder Hilfsstoffe,
d) auf das PVC bezogen 1 bis 50 % eines thermoplastischen Methacrylsäureester-Copolymers enthält,

dadurch gekennzeichnet, daß die Komponente d) ein Methacrylsäuremethyl/ethyl/n-butylester-Terpolymer ist, dessen Glasübergangstemperatur um höchstens 20 °C höher liegt als die des PVC.

Zwar wurde die Erfindung in erster Linie dazu ausgearbeitet, zu Flächengebilden mit Schaumstruktur verarbeitbare Massen auch auf der Basis von Suspensions- beziehungsweise Blockpolymerisations-Polyviylchlorid zu schaffen, es besteht jedoch keinerlei Hindernis, in den erfindungsgemäßen Massen auch in der Streichverfahrenstechnik beziehungsweise -technologie verarbeitbares Emulsionspolymerisationspolyvinylchlorid zu haben. Der K-Wert des zu verarbeitenden Polyvinylchlorides beträgt 50 bis 80. Die durch verschiedene Polymerisationsverfahren hergestellten Polyvinylchloridarten können als Gemische vorliegen.

Zwar wurde die Erfindung in erster Linie dazu ausgearbeitet, zu Flächengebilden mit Schaumstruktur verarbeitbare Massen auch auf der Basis von Suspensions- bzw. Blockpolymerisations-Polyvinylchlorid zu schaffen, es besteht jedoch keinerlei Hindernis, in den erfindungsgemäßen Massen auch in der Streichverfahrenstechnik bzw. -technologie verarbeitbares Emulsionspolymerisations-Polyvinylchlorid zu haben. Der K-Wert des zu verarbeitenden Polyvinylchlorides beträgt 50 bis 80. Die durch verschiedene Polymerisationsverfahren hergestellten Polyvinylchloridarten können als Gemische vorliegen.

In der US-A 3 293 108 wird die Verarbeitung von Plastisolen, d. h. Massen, die nicht mit dem Kalander verarbeitet werden können, sondern nur mit Streichmaschinen, beschrieben.

In den GB-A 778 880 und 1 281 489 wird die Verarbeitung von Polyvinylchlorid-Pulvergemischen beschreiben, wobei jedoch kein Kalander eingesetzt wird, sondern die Massen in einer einzigen Stufe auf einen Träger oder in einer Form gegossen und gleichzeitig verschäumt werden.

In der DE-A 2 143 377 bzw. in der FR-A 2 274 649 wird die Extrusion oder das Spritzgießen von Polyvinylchlorid-Pulvergemischen beschrieben. Bei diesen Verfahren tritt das Problem, um dessen erfolgreiche Lösung sich die vorliegende Erfindung bemüht hat, überhaupt nicht auf, und zwar die Trennung des Vorgangs der Ausbildung der Fläche und des Arbeitsganges des Aufschäumens.

Die DE-B 1 194 139 beschreibt ebenfalls ein Kalanderverfahren, wobei in diesem Falle es nicht darum geht, die Flächenbildung von der Verschäumung temperaturmäßig zu trennen, sondern die Aufgabe zu lösen war, dem aufgeschäumten Produkt eine lederähnliche, porenfreie Oberfläche zu verleihen, was durch kurzes Erhitzen und plötzliches Abkühlen erreicht wird. Polyacrylate werden in dieser Literaturstelle nicht erwähnt, desgleichen findet man auch nirgends einen Hinweis auf die erfindungsgemäß wesentliche Rolle der $T_g$-Werte.

Bei dem in der DE-B 1 694 709 beschriebenen Verfahren wird die Schmelzviskosität von Polyvinylchlorid-Polymermassen unter Einsatz unterschiedlicher Zusätze modifiziert. Auch in diesem Falle galt es nicht, die erfindungsgemäß gestellte Aufgabe zu lösen, wobei sich auch kein Hinweis auf thermoplastische Polyacrylate und die Bedeutung der $T_g$-Werte findet. Die gleichen Ausführungen gelten bezügliche der FR-A 2 186 495.

Nach dem in der DE-A 20 16 043 beschriebenen Verfahren wird die Geschwindigkeit des Aufschäumens von Polymermassen reguliert, wobei sich diese Literaturstelle die Aufgabe gestellt hat, geschäumte Produkte mit gleichmäßiger Schaumzellengröße herzustellen. Zur Lösung dieser Aufgabe werden dem Polyvinylchlorid spezielle, aus Methylmethacrylat, ungesättigte Nitrilen und gegebenenfalls aromatischen Vinylverbindungen hergestellte Polymere zugemischt. Diese Polyacrylate unterscheiden sich von den erfindungsgemäß eingesetzten Acrylsäureester- und/oder Methacrylsäureesterpolymeren und/oder -copolymeren, die keine Vinyl- oder Nitrileinheiten enthalten. Darüber hinaus ist das Verfahren gemäß dieser Literaturstelle auf beliebige Polyvinylchlorid-Verschäumungsmethoden anwendbar. Auf die Probleme bezüglich des Zerfalls der Verschäumungsmittel bei der Filmbildung findet man nirgends einen Hinweis, desgleichen nicht auf die Bedeutung der Glasübergangstemperatur der eingesetzten Polymeren.

Vorzugsweise enthalten die erfindungsgemäßen Massen als Komponente d) ein Terpolymer, dessen Verglasungstemperatur ($T_g$) niedriger als die des verwendeten Polyvinylchlorides ist.

Es ist auch bevorzugt, daß die erfindungsgemäßen Massen das Terpolymer d) in Mengen von 10 bis 30 Gew.-%, bezogen auf das Polyvinylchlorid, enthalten.

Als Schaumbildner können die erfindungsgemäßen Massen die zur Herstellung von Polyvinylchlorid-Schaumstoffprodukten üblicherweise verwendeten festen anorganischen oder organischen Verbindungen, welche bei der Temperatur des Formens des Flächengebildes noch nicht zersetzt werden, bei der Schäumungstemperatur jedoch Gas entwickeln, enthalten. Da die Flächenbildung durch Formen, zum Beispiel auf einem Kalander oder in einem Walzenstuhl, bei Temperaturen von 80 bis 160 °C vor sich geht und das Aufschäumen bei 160 bis 210 °C vorgenommen wird, sind die Schaumbildner zweckmäßig solche, deren Gasentwicklung erst über 80 bis 160 °C je nach der Temperatur der Flächenbildung durch Formen einsetzt. Geeignete Schaumbildner sind zum Beispiel folgende : Natriumbicarbonat, N,N'-Dinitrosopentamethylentetramin, Diphenylsulfon-3,3'-disulfonylhydrazid, Diphenyloxyd-4,4'-sulfonylhydrazid und Azodicarbonimid.

Die Schaumbildner können zusammen mit zur Herstellung von Polyvinylchlorid-Schaumstoffprodukten üblicherweise verwendeten Promotoren (die Zersetzung regelnden Stoffen) vorliegen. Beispiele für Promotoren sind Barium-, Cadmium-, Zink- und/oder Bleisalze und/oder -oxyde ; ihre Menge beträgt zweckmäßig 0,1 bis 3,0 Gew.-%, bezogen auf das Polyvinylchlorid. Auch beim Vorliegen der Schaumbildner zusammen mit Promotoren sollen die ersteren zweckmäßig solche, bei welchen die Gasentwicklung erst über 80 bis 160 °C je nach der Temperatur der Flächenbildung durch Formen einsetzt, sein.

Als in den erfindungsgemäßen Massen gegebenenfalls vorliegende Zusatz- und/oder Hilfsstoffe kommen zum Beispiel die folgenden in Frage :

I) Wärmestabilisatoren, wie neutrale und/oder basische Barium-, Calcium-, Cadmium-, Zink- und/oder Bleisalze von Stearinsäure, Ricinolsäure, Ölsäure und/oder Laurinsäure, organische Bleiverbindungen, wie Mono- und/oder Dialkylbleiverbindungen, Alkylarylbleiverbindungen, Alkylmercaptobleiverbindungen, Tetraalkyl- und/oder Tetraarylbleiverbindungen. Sie liegen zweckmäßig in Mengen von 0,3 bis 3,0 Gew.-%, bezogen auf das Polyvinylchlorid, vor.

II) Lichtstabilisatoren, wie 2-Hydroxy-4-(n-octyloxy)-benzophenon, 2-Hydroxy-4-methoxybenzophenon und/oder 2-[2'-Hydroxy-5'-(n-octyl)-phenyl]-benztriazol. Sie liegen zweckmäßig in Mengen von 0,1 bis 2,0 Gew.-%, bezogen auf das Polyvinylchlorid, vor.

III) Gleitmittel, wie Fettalkohole, aliphatische Carbonsäuren und/oder Oxycarbonsäuren mit mehr als 10 Kohlenstoffatomen und/oder Ester und/oder Amide dieser Carbonsäuren und/oder Wachse. Sie liegen zweckmäßig in Mengen von 0,1 bis 3,0 Gew.-%, bezogen auf das Polyvinylchlorid, vor.

IV) Füllstoffe, wie natürliche Mineralien, beispielsweise Sulfide, Sulfate, Carbonate, Oxyde und/oder Mineralfasern, organische Fasermaterialien und/oder sonstige organische Füllstoffe. Sie liegen zweckmäßig in Mengen von 5 bis 50 Gew.-%, bezogen auf das Polyvinylchlorid, vor.

V) Weichmacher, wie Ester von Mono-, Di- und/oder Tricarbonsäuren mit 2 bis 12 Kohlenstoffatomen, beispielsweise Di-n-butylphthalat, Di-n-butyladipat, Benzyl-n-butylphthalat und/oder Di-n-octylsebacat, Triarylphosphate, beispielsweise Trikresylphosphat, Sulfonsäureester, beispielsweise Phenyl- und/oder Benzylester von Alkylsulfonsäuren mit 12 bis 18 Kohlenstoffatomen, epoxydierte Öle und/oder Polymere mit Weichmacherwirkung, beispielsweise Polysebacate, Polyadipate und/oder Polyphthalate. Sie liegen zweckmäßig in Mengen von 20 bis 80 Gew.-%, bezogen auf das Polyvinylchlorid, vor.

VI) Pigmente, wie Cadmiumrot, Cadmiumgelb, Eisenoxydrot, Eisenoxydgelb, Titandioxyd, Ruß, Phthalocyaninblau, Phthalocyaningrün, Anthrachinonblau und/oder Anthrachinonrot. Sie liegen zweckmäßig in Mengen bis 8 Gew.-%, bezogen auf das Polyvinylchlorid, vor.

Gegenstand der Erfindung ist auch ein Verfahren zur Herstellung von ein- oder mehrschichtigen Polyvinylchlorid-Flächengebilden mit Schaumstruktur durch Formen der erfindungsgemässen trockenen pulverförmigen Massen auf Polyvinylchloridbasis bei erhöhter Temperatur durch Strangpressen, Kalandrieren oder Verarbeiten unter Schmelzen in einem Schmelzwalzenstuhl zu kompakten Flächengebilden (Bahnen) beziehungsweise Flächengebilden mit kompaktem Querschnitt und Aufschäumen der erhaltenen kompakten Flächengebilde durch Temperaturerhöhung, welches dadurch gekennzeichnet ist, daß als trockene pulverförmige Massen solche nach der Erfindung verwendet werden, deren Formen bei 80 bis 160 °C, gegebenenfalls auf später einen Teil des Fertigproduktes bildenden oder von diesem nachträglich ablösbaren Trägern oder auf anderen Polymerbahnen, durchgeführt wird und gegebenenfalls auf die kompakten Flächengebilde mit der Flächengebilde bildenden Vorrichtung ein oder mehr weitere Polymerschicht(en) aufgebracht wird beziehungsweise werden sowie das Aufschäumen der erhaltenen ein- oder mehrschichtigen kompakten Flächengebilde, gegebenenfalls nach einer an sich bekannten Muster erzeugenden Oberflächenbehandlung, in einem auf 160 bis 210 °C aufgeheizten Heizschrank durchgeführt wird.

Im erfindungsgemäßen Verfahren kann das Formen zu kompakten Flächengebilden durch Strangpressen, Kalandrieren oder Verarbeiten unter Schmelzen in einem Schmelzwalzenstuhl nach an sich bekannten Verfahrensweisen durchgeführt werden. Infolge der speziellen Zusammensetzung der erfindungsgemäßen trockenen pulverförmigen Massen, in erster Linie wegen des in ihnen enthaltenen Terpolymers kann aber das Formen zu den kompakten Flächengebilden bei Temperaturen, welche 20 bis 100 °C unterhalb der üblichen Kalandertemperaturen liegen, vorgenommen werden. Dadurch kann ein vorzeitiger Beginn der Schaumbildung mit Sicherheit vermieden werden. Mikroskopische Materialuntersuchungen haben gezeigt, daß im Abschnitt des Formens zu den Flächengebilden das Terpolymer d) mindestens zum Teil geschmolzen vorliegt und seine Schmelze die noch festen oder eben zu schmelzen beginnenden Polyvinylchloridteilchen umgibt. Das völlige Schmelzen der Polyvinylchloridteilchen findet im allgemeinen zusammen mit der Gasbildung statt. In diesem Abschnitt der Fertigung entsteht aus den geschmolzenen Polyvinylchloridteilchen und der Schmelze des Terpolymers d) ein homogenes Gemisch, in dem auch die gegebenenfalls vorhandenen Zusatzstoffe, wie Pigmente, homogen verteilt sind. Die Tatsache, daß die Polyvinylchloridteilchen erst bei der Schaumbildung völlig schmelzen, ist von großer Bedeutung für die Bildung eines feinporigen Schaumes mit geschlossenen Zellen.

Wenn ein mehrschichtiges Produkt herzustellen ist, wird die erste, das heißt mit der Vorrichtung unmittelbar in Berührung kommende Schicht auf einem später einen Teil des Fertigproduktes bildenden oder von diesem nachträglich ablösbaren Träger ausgebildet. Als einen Teil des Fertigproduktes bildende Träger können zum Beispiel in der Kunstlederfertigung übliche Strick- und Wirkwaren, sowie gewebte Textilien, Filz und Glasfasergewebe eingesetzt werden. Als nachträglich ablösbare Träger können zum Beispiel Stahlbleche oder oberflächenbehandelte Papiere verwendet werden. Die erfindungsgemäß hergestellten mehrschichtigen Flächengebilde enthalten mindestens eine Schicht mit Schaumstruktur. Zur Anordnung der verschiedenen Schichten dienen folgende Beispiele :
Schaumschicht/Schaumschicht (unterschiedlich).
Kompakte Schicht/Schaumschicht.
Kompakte Schicht/Schaumschicht/kompakte Schicht (Sandwich).

Wenn die mehrschichtigen Produkte auf einem Kalander oder in einem Schmelzwalzenstuhl herzustellen sind, wird auf die auf den Träger aufgebrachte erste Schicht das zwischen den Schmelzwalzen geschmolzene Pulvergemisch der folgenden Schicht in Form eines Filmes aufgetragen. Dieser Arbeitsgang kann beliebig wiederholt werden. Von der letzten Walze wird ein Produkt, dessen Struktur noch in allen Schichten kompakt ist, abgezogen.

Bei Herstellung der mehrschichtigen Produkte mit einer Strangpresse wird auf die auf dem Träger befindliche erste Schicht die folgende Schicht unmittelbar stranggepreßt. Dieser Vorgang ist beliebig oft wiederholbar. Die zwei beziehungsweise mehr Schichten werden zwischen Walzenpaaren aneinandergedrückt. Von der letzten Walze wird ein aus mehreren Schichten bestehendes noch völlig kompaktes Produkt abgezogen.

Im Falle der Herstellung von mehrschichtigen Produkten kann je nach der gewünschten Anwendung entweder die aufzuschäumende Schicht oder die Schicht, welche kompakt zu bleiben hat, unmittelbar auf den Träger als erste Schicht aufgebracht werden.

Die gegebenenfalls durchgeführte musterbildende Oberflächenbehandlung des von der Walzenvorrichtung oder der Strangpresse abgezogenen ein- oder mehrschichtigen kompakten Flächengebildes kann zum Beispiel darin bestehen, daß auf die Oberfläche der aufzuschäumenden Schicht in einem bestimmten Muster die Geschwindigkeit der Schaumbildung beeinflussende Substanzen aufgebracht werden. Im Abschnitt der Schaumbildung schäumen die Stellen, die behandelt wurden, mit anderer Geschwindigkeit auf als die unbehandelten Bereiche, das heißt, daß die Blähung des Materiales verschieden ist, und auf diese Weise wird eine Strukturierung der Oberfläche erreicht. Diese Art der Musterbildung und die dazu geeigneten Materialien sind in zahlreichen Veröffentlichungen beschrieben (britische Patentschrift 1 117 983, US-Patentschriften 3 293 108, 3 293 094 und 3 545 057). Als Substanzen, mit denen die Geschwindigkeit des Aufschäumens beeinflußt werden kann, seien zum Beispiel Trimellithsäureanhydrid, Oxalsäure, Fumarsäure Cadmium-[2-(äthyl)-capronat] {Cadmiumoctoat} und Bleiphthalat erwähnt.

Bei den Verfahren nach den deutschen Offenlegungsschriften 2 145 026 und 2 616 083 (Aufschäumen direkt in der Kalandervorrichtung) bestand keine Möglichkeit zur Musterbildung durch Vorbehandlung. Durch das erfindungsgemäße Verfahren dagegen können, da das Aufschäumen nach dem Formen zu kompakten Flächengebilden (Bahnbildung) getrennt in einem Heizschrank vorgenommen wird, auf einfache Weise Produkte mit gemusterter Oberfläche hergestellt werden.

Die letzte Stufe des erfindungsgemäßen Verfahrens, das heißt das Aufschäumen der erhaltenen kompakten Flächengebilde in einem auf 160 bis 210 °C aufgeheizten Heizschrank, kann in der Weise durchgeführt werden, daß das von der zu kompakten Flächengebilden formenden (bahnbildenden) Vorrichtung abgenommene, gegebenenfalls gemusterte, ein- oder mehrschichtige, noch in allen Schichten kompakte Flächengebilde durch einen auf 160 bis 210 °C aufgeheizten Heizschrank geführt wird. Durch die Wärmeeinwirkung bildet sich in den Schichten, die Schaumbildner enthalten, Gas, und es entsteht die gewünschte Schaumstruktur.

Falls keine Muster erzeugende Vorbehandlung vorgenommen wurde, kann das aufgeschäumte Flächengebilde auf die für Kunstleder übliche Weise oberflächenveredelt werden.

Die Maßhaltigkeit und Oberflächenqualität der erfindungsgemäß erhaltenen Produkte entsprechen denen der mit der Streichverfahrenstechnik beziehungsweise -technologie hergestellten Produkte. Hinsichtlich der Maßhaltigkeit, der Schaumstruktur und der Oberflächenqualität übertreffen die erfindungsgemäß hergestellten Produkte die mit der üblichen Kalandertechnik hergestellten Flächengebilde bei weitem.

Im Gegensatz zu sämtlichen Drucksschriften des Standes der Technik, in welchen von Verglasungstemperaturen keine Rede ist, ist es erfindungswesentlich, das erfindungsgemäße Terpolymer d) zu verwenden, das bei der Verarbeitungstemperatur ein elastisches Gemisch ergibt, und dessen Verglasungstemperatur ($T_g$) höchstens 20 °C höher ist als diejenige des verwendeten Polyvinylchlorids. Nur dadurch kann die erfindungsgemäß gestellte Aufgabe gelöst werden, wobei nur dadurch die erstrebte Verringerung des Zersetzungspunktes des Schaumbildners erreicht werden kann. Es kommt also nicht auf die bloße Tatsache der Gegenwart von Vinylchloridhomopolymeren beziehungsweise Vinylchloridcopolymeren, welche in jedem Falle als grundlegende Filmbildner anzusehen sind, jedoch allein die erfindungsgemäß erreichten besonderen Eigenschaften und damit besondere Leistungsfähigkeit der erfindungsgemäßen Massen nicht sicherzustellen vermögen, an. Soweit die Verarbeitbarkeit der erfindungsgemäßen Massen eine andere als die von solchen des Standes der Technik ist, zeigt dies zusätzlich die Verschiedenheit der Massen selbst an.

So bringen die erfindungsgemäßen Massen gegenüber denen der britischen Patentschrift 1 281 489, welche nur durch die Streichverfahrenstechnik mittels Sinterns verarbeitbar sind, den Vorteil mit sich, daß sie strangpreßbar und kalandrierbar sind und sogar mit einer aus zwei oder drei Zylindern bestehenden Schmelzwalzenvorrichtung verarbeitbar sind. Für das letztere Verarbeitungsverfahren ist die Plastifizierbarkeit der Masse Voraussetzung, während dies für das Pulverstreichverfahren nicht gilt. Auch ist es im Gegensatz zu den Massen der britischen Patentschrift 1 281 489, welche die Forderung, daß nicht gleichzeitig mit der Überzugsbildung die Ausbildung der Schaumstruktur eintritt, nicht zu erfüllen vermögen und folglich mit dem Schmelzwalzenverfahren nicht verarbeitbar sind, möglich, die erfindungsgemäßen Massen mit gutem Ergebnis durch das Schmelzwalzenverfahren zu verarbeiten. Hinzukommt noch, daß die erfindungsgemäßen Massen sich auch zur Herstellung von mehrschichtigen plattenförmigen Körpern eignen, was nach der britischen Patentschrift 1 281 489 nicht zu verwirklichen ist. Auch ist es nach der britischen Patentschrift 1 281 489 zwingend erforderlich, daß die relativen Viskositäten der verwendeten Vinylchloridpolymere beziehungsweise -copolymere in der angegebenen Weise verschieden sind, wäßrend erfindungsgemäß die Verschiedenheit der relativen Viskositäten keine Bedingung ist.

Auch die Druckschrift Encyclopedia of Polymer Science and Technology, Band 14, 1971, Seite 371 vermochte keine Anregung in Richtung auf die Erfindung zu geben, da in dieser nur die Verglasungstemperatur ($T_g$) nur allgemein erörtert ist und überhaupt keine Ausführungen über die Verglasungstemperaturen beziehungsweise über ihre Beziehung zueinander bei Mischungen von Vinylchloridpolymeren beziehungsweise -copolymeren gemacht sind.

Auch von den Massen der deutschen Auslegeschrift 1 194 139 unterscheiden sich die erfindungsgemäßen Massen durch die Verwendung eines wie oben festgelegten Bestandteiles [Bestandteil d)], durch welchen auch der Zersetzungspunkt des Schaumbildners verringert wird. Auch wird beim erfindungsgemäßen Verfahren bei höheren Temperaturen als beim Verfahren der deutschen Auslegeschrift 1 194 139 gearbeitet.

Da die erfindungsgemäßen Massen trockene pulverförmige Massen im Gegensatz zu den Plastisolen der US-Patentschrift 3 293 118 sind, sind die beiden miteinander überhaupt nicht vergleichbar, wobei die erfindungsgemäßen Massen den Vorteil mit sich bringen, daß ihre Verarbeitung nicht auf die Streichverfahrenstechnik beschränkt ist und sie daher nicht durch Emulsionspolymerisation hergestellte Vinylchloridpolymere beziehungsweise -copolymere enthalten müssen, sondern genauso gut auch durch Suspensions- und/oder Blockpolymerisation hergestellte Vinylchloridpolymere beziehungsweise -copolymere enthalten können.

Auch von den Massen der französischen Offenlegungsschrift 2 274 649, welche übrigens weichmacherfrei sind, unterscheiden sich die erfindungsgemäßen Massen in der Verwendung des Bestandteiles mit festgelegter Verglasungstemperatur [Bestandteil d)], die zu der des durch Emulsions-, Suspensions- und/oder Blockpolymerisation hergestellten Polyvinylchlorides in Beziehung gesetzt ist. So können die erfindungsgemäßen Massen im Gegensatz zu denen der genannten Druckschrift, welche nur in einem 1-stufigen Verfahren verarbeitet werden können, das heißt, daß das Schäumen in der Strangpresse gleichzeitig mit der Formgebung stattfinden muß, auch 2-stufig verarbeitet werden.

Analog unterscheiden sich die erfindungsgemäßen Massen von denen der britischen Patentschrift 778 880. Auch in diesem Falle besteht ein Unterschied in der Verarbeitbarkeit, indem die erfindungsgemäßen Massen durch einen weiten Bereich von Verarbeitungsverfahren, wie Strangpressen, Kalandrieren und mit Schmelzwalzen, verarbeitet werden können, während die Massen der genannten Druckschrift durch Gießen unter Druck in einer Form zu verarbeiten sind.

Es besteht der grundlegende Unterschied zwischen den erfindungsgemäßen Massen und denen der französischen Offenlegungsschrift 2 186 495, daß die ersteren trocken und pulverförmig sind, während es sich bei den letzteren um flüssige Pasten handelt. Die Probleme der Filmbildung und der Bildung von Formkörpern aus den beiden Arten von Massen sind aber in keiner Weise miteinander vergleichbar, wobei die erfindungsgemäßen Massen auch durch Strangpressen und Kalandrieren verarbeitet werden können, während dies für die Massen der genannten Druckschrift von vornherein nicht in Frage kommt.

Auch von den Massen der deutschen Auslegeschrift 1 694 709 unterscheiden sich die erfindungsgemäßen Massen durch den Bestandteil mit festgelegter Verglasungstemperatur [Bestandteil d)], die zu der des durch Emulsions-, Suspensions- und/oder Blockpolymerisation hergestellten Polyvinylchlorides in Beziehung gesetzt ist. Daher ist für die erfindungsgemäßen Massen auch eine ausgedehntere Verarbeitbarkeit gegeben, während die Verarbeitungsverfahren, welchen die erfindungsgemäßen Massen zugänglich sind, an den Massen nach der genannten Druckschrift nicht durchführbar sind. So wäre das in der genannten Druckschrift durchgeführte Kneten bei 150 °C für ein mit Schmelzwalzen durchgeführtes Verarbeitungsverfahren unannehmbar.

Zwischen den erfindungsgemäßen Verfahren und denen der deutschen Offenlegungsschrift 2 016 043 besteht der grundlegende Unterschied, daß die ersteren trocken und pulverförmig, die letzteren dagegen Plastisole sind. Damit bringt die Erfindung gegenüber dieser Druckschrift die bereits weiter oben erörterten Vorteile mit sich.

Im Gegensatz zur deutschen Offenlegungsschrift 2 143 377 muß erfindungsgemäß kein nach einem speziellen Verfahren hergestelltes Vinylchloridpolymer beziehungsweise -copolymer verwendet werden. Vielmehr kommt es nur darauf an, daß die Verglasungstemperaturen unter Beachtung der Festlegung für den Bestandteil d) gewählt wird, wovon in der deutschen Offenlegungsschrift 2 143 377 nicht im geringsten die Rede ist. Auch wird erfindungsgemäß im Gegensatz zur deutschen Offenlegungsschrift 2 143 377, in welcher die Bildung des Formkörpers 1-stufig durchgeführt wird, das heißt die Ausbildung der Schaumstruktur gleichzeitig mit der Formgebung erfolgt, die Bildung des Formkörpers 2-stufig vorgenommen, das heißt, daß bei der Formbildung die Gasbildung noch ausgeschlossen ist. Ferner können mit den erfindungsgemäßen Massen im Gegensatz zu denen nach der deutschen Offenlegungsschrift 2 143 377, mit welchen nur Formkörper hergestellt werden können, auch plattenförmige Gebilde hergestellt werden. Weiterhin können die erfindungsgemäßen Massen im Gegensatz zu denen der deutschen Offenlegungsschrift 2 143 377, in welcher nur von einem Spritzgießen und Strangpressen die Rede ist, durch Kalandrieren verarbeitet werden.

Die Erfindung wird an Hand des folgenden Beispiels näher erläutert.

## Beispiel

Es wurde ein zur Verarbeitung in einer Strangpresse geeignetes trockenes Pulvergemisch aus den folgenden Bestandteilen hergestellt :

| | |
|---|---|
| Suspensionspolymerisationspolyvinylchlorid (K-Wert : 64 ; $T_g$ 98 °C) | 90 Gew.-Teile |
| Emulsionspolyvinylchlorid (K-Wert : 70 ; $T_g$ 102 °C | 10 Gew.-Teile |
| Polymethacrylsäure-(methyl)-(äthyl)-(n-butyl)-ester mit regelloser Verteilung der veresternden Methyl-, Äthyl- und n-Butylgruppen, von welchen 88 Mol-% Methylgruppen, 10 Mol-% Äthylgruppen und 2 Mol-% n-Butylgruppen sind Di-n-octylphthalat | 60 Gew.-Teile |
| Glycerinmonostearat | 0,3 Gew.-Teil |
| Paraffin | 0,5 Gew.-Teil |
| Di-[n-butyl]-di-[O-(isooctylmaleoyloxy)-blei {Di-(n-butyl)-bleidi-(isooctylmaleinat)} | 1,0 Gew.-Teil |

$$\text{For-mel:} \quad \left( n\text{-}C_4H_9 - \right)_2 \; Pb \left( - O - \overset{O}{\underset{||}{C}} - \overset{H}{\underset{|}{C}} = \overset{H}{\underset{|}{C}} - \overset{O}{\underset{||}{C}} - O - iso\text{-}C_8H_{17} \right)_2$$

| | |
|---|---|
| Azodicarbonimid | 5 Gew.-Teile |
| Eisenoxydrot | 4 Gew.-Teile |

Die Bestandteile wurden homogenisiert und bei 160 °C stranggepreßt. Das erhaltene stranggepreßte Flächengebilde wurde mit einem Textilträger vereinigt. Der Verbund wurde mit einer Geschwindigkeit von 12 m/Minute durch einen auf 210 °C aufgeheizten Heizschrank geführt. Das mit dem Textilträger versehene Polyvinylchlorid-Schaumstoffprodukt hatte folgende Parameter :

Quadratmetergewicht : 500 g/m$^2$
Dicke : 2,0 mm
Zerreißfestigkeit : 500 N/50 mm
Zerreißdehnung : 6 %

## Patentansprüche

1. Trockenes pulverförmiges Gemisch zur Herstellung von geschäumten PVC-Flächengebilden in zwei Verfahrensstufen, welches
    a) Emulsions-, Suspensions- und/oder Blockpolymerisations-PVC,
    b) einen oder mehrere Schaumbildner in einer Menge von 1 bis 10 Gew.-%, bezogen auf das PVC,
    c) auf das PVC bezogen höchstens 150 % Zusatz- und/oder Hilfsstoffe,
    d) auf das PVC bezogen 1 bis 50 % eines thermoplastischen Methacrylsäureester-Copolymers enthält,
dadurch gekennzeichnet, daß die Komponente d) ein Methacrylsäuremethyl/ethyl/n-butylester-Terpolymer ist, dessen Glasübergangstemperatur um höchstens 20 °C höher liegt als die des PVC.

2. Massen nach Anspruch 1, dadurch gekennzeichnet, daß sie als Komponente (d) ein Terpolymer, dessen bzw. deren Verglasungstemperatur (T$_g$) niedriger als die des verwendeten Polyvinylchlorids ist, enthalten.

3. Massen nach Anspruch 1 bis 2, dadurch gekennzeichnet, daß sie das Terpolymer (d) in Mengen von 10 bis 30 Gew.-%, bezogen auf das Polyvinylchlorid, enthalten.

4. Massen nach Anspruch 1 bis 3, dadurch gekennzeichnet, daß sie als Schaumbildner (b) einem solchen bzw. solche, welche [r] an sich oder zusammen mit Promotoren erst bei Temperaturen über 80 bis 160 °C je nach der Temperatur der Flächenbildung durch Formen Gase entwickeln, enthalten.

5. Verfahren zur Herstellung von ein- oder mehrschichtigen Polyvinylchlorid-Flächengebilden mit Schaumstruktur durch Formen von trockenen pulverförmigen Massen auf Polyvinylchloridbasis bei erhöhter Temperatur durch Strangpressen, Kalandrieren oder Verarbeiten unter Schmelzen in einem Schmelzwalzenstuhl zu kompakten Flächengebilden und Aufschäumen der erhaltenen kompakten Flächengebilde durch Temperaturerhöhung, dadurch gekennzeichnet, daß man als trockene pulverförmige Massen solche nach Anspruch 1 bis 4 verwendet, deren Formen in an sich bekannter Weise bei 80 bis 160 °C, gegebenenfalls auf später einen Teil des Fertigproduktes bildenden oder von diesem nachträglich ablösbaren Trägern, durchführt und gegebenenfalls auf die kompakten Flächengebilde mit der Flächengebilde bildenden Vorrichtung eine oder mehr weitere Polymerschicht(en) aufbringt sowie das Aufschäumen der erhaltenen ein- oder mehrschichtigen kompakten Flächengebilde, gegebenenfalls nach einer an sich bekannten Muster erzeugenden Oberflächenbehandlung, in einem auf 160 bis 210 °C aufgeheizten Heizschrank durchführt.

## Claims

1. Dry powdery mixture for preparing foamed flat-shaped PVC-articles in two process steps containing
    a) emulsion-, suspension-, and/or block polymerisattion-PVC,
    b) one or more foaming agents in an amount of 1 to 10 % by weight, based on the PVC,
    c) utmost 150 % additives and/or adjuvants, based on the PVC,
    d) 1 to 50 % of a thermoplastic methacrylic acid ester-copolymer, based on the PVC,
characterized by the fact that the component (d) is a methacrylic acid methyl/ethyl/n-butylester-terpolymer the glass transition temperature of which is at most 20 °C higher than that of the PVC.

2. Compositions according to claim 1, characterized by the fact that they contain as component (d) a terpolymer the glass forming temperature (T$_g$) of which is lower than that of the used polyvinyl chloride.

3. Compositions according to claim 1 to 2, characterized by the fact that they contain the terpolymer (d) in amounts of 10 to 30 % by weight, based on the polyvinyl chloride.

4. Compositions according to claim 1 to 3, characterized by the fact that they contain as foaming agent (b) a such one and those ones, respectively, which as such or together with promotors only at temperatures above 80 to 160 °C develop gases according to the temperature of the formation of the flat-shaped articles by shaping.

**0 074 035**

5. A process for preparing single- or multilayered flat-shaped PVC articles having foam structure by shaping dry powdery compositions on polyvinyl chloride basis to compact flat-shaped articles at elevated temperature by extrusion, calandering or processing under melting in a melt roll, and foaming of the obtained compact flat-shaped articles by temperature elevation, characterized by the fact that as dry powdery compositions those according to claim 1 to 4 are used the shaping of which in a manner known per se is carried out at 80 to 160 °C, optionally on supports forming later a part of the final product or being releasable from the same, and by use of the apparatus forming the flat-shaped articles onto the compact flat-shaped articles one or more additional polymeric layer(s) is (are) applied, and the foaming of the obtained single- or multilayered compact flat-shaped articles is carried out in a heating apparatus heated to 160 to 210 °C, optionally after a pattern producing surface treatment known per se.

**Revendications**

1. Mélange pulvérulent sec pour la préparation d'articles plats en chlorure de polyvinyle moussés, en deux stades, qui renferme

a) du chlorure de polyvinyle obtenu par polymérisation en émulsion, en suspension et/ou en masse,

b) un ou plusieurs agents moussants dans une proportion de 1 à 10 % en poids, par rapport au chlorure de polyvinyle,

c) au plus 150 % d'additifs et/ou adjuvants, par rapport au chlorure de polyvinyle,

d) 1 à 50 % d'un copolymère thermoplastique d'esters d'acide méthacrylique, par rapport au chlorure de polyvinyle,

caractérisé en ce que le constituant (d) est un terpolymère méthacrylate de méthyle/méthacrylate d'éthyle/méthacrylate de n-butyle, dont la température transitoire de vitrification est supérieure d'au plus 20 °C à celle du chlorure de polyvinyle.

2. Masses selon la revendication 1, caractérisées en ce qu'elles renferment, comme constituant (d), un terpolymère dont la température de vitrification ($T_g$) est inférieure à celle du chlorure de polyvinyle utilisé.

3. Masses selon les revendications 1 et 2, caractérisées en ce qu'elles renferment le terpolymère (d) dans des proportions de 10 à 30 % en poids par rapport au chlorure de polyvinyle.

4. Masses selon les revendications 1 à 3, caractérisées en ce qu'elles renferment, comme agent moussant (b), un tel agent ou de tels agents qui, en lui-même (ou eux-mêmes) ou conjointement avec des activateurs, ne dégage(nt) de gaz qu'à des températures supérieures à 80 jusqu'à 160 °C, selon la température de constitution d'articles plats par façonnage.

5. Procédé de préparation d'articles plats en chlorure de polyvinyle à une ou plusieurs couches à structure de mousse par façonnage de masses pulvérulentes sèches à base de chlorure de polyvinyle à une température élevée, par extrusion, calandrage ou transformation par fusion dans un laminoir de fusion, sous la forme d'articles plats compacts, et moussage des articles plats compacts obtenus par augmentation de température, caractérisé en ce qu'on utilise, comme masses pulvérulentes sèches, de telles masses selon les revendications 1 à 4, dont on effectue le façonnage de façon connue en soi à 80 jusqu'à 160 °C, éventuellement sur des supports constituant ultérieurement une partie du produit fini ou pouvant en être séparés ultérieurement, et en ce que l'on applique éventuellement sur les articles plats compacts, à l'aide du dispositif de formation des articles plats, une ou plusieurs autre(s) couche(s) de polymère, et en ce que l'on effectue également le moussage des articles plats compacts à une ou plusieurs couches, obtenu éventuellement après un traitement de surface connu en soi produisant un dessin, dans une étuve chauffée à une température comprise entre 160 et 210 °C.